# FASCICULE DE BREVET EUROPEEN

(11) **EP 3 074 611 B1**
(45) Date de publication et mention de la délivrance du brevet: **24.10.2018**
(21) Numéro de dépôt: 14821737.5
(22) Date de dépôt: 25.11.2014
(51) Int. Cl.: F16C 19/26, F16C 27/04, F16C 33/58, F16C 35/077, F01D 21/04, F01D 25/16

(54) **DISPOSITIF POUR LE CENTRAGE ET LE GUIDAGE EN ROTATION D'UN ARBRE DE TURBOMACHINE COMPRENANT DES MOYENS AMÉLIORÉS DE RÉTENTION DE BAGUE EXTÉRIEURE DE PALIER**
VORRICHTUNG ZUR ZENTRIERUNG UND FÜHRUNG DER ROTATION EINER TURBINENMOTORWELLE MIT VERBESSERTEM MITTEL ZUM ZURÜCKHALTEN DES ÄUSSEREN LAGERRINGS
DEVICE FOR CENTRING AND GUIDING THE ROTATION OF A TURBINE ENGINE SHAFT INCLUDING IMPROVED MEANS FOR RETAINING THE EXTERNAL BEARING RING

(30) Priorité: 26.11.2013 FR 1361629
(43) Date de publication de la demande: 05.10.2016
(73) Titulaire: Safran Aircraft Engines, 75015 Paris (FR)
(72) Inventeur: SERVANT, Régis Eugène Henri, 77550 Moissy-Cramayel Cedex (FR); ANTUNES, Serge Louis, 77550 Moissy-Cramayel Cedex (FR); BELLAY, Julie, 77550 Moissy-Cramayel Cedex (FR); CRETIN, Fabrice, 77550 Moissy-Cramayel Cedex (FR); LOURIT, Damien, 77550 Moissy-Cramayel Cedex (FR)
(74) Mandataire: Brevalex
(86) Numéro de dépôt international: PCT/FR2014/053020
(87) Numéro de publication internationale: WO 2015/079156

(56) Documents cités:
- EP-A2- 1 630 357
- FR-A1- 2 960 907
- US-A1- 2003 039 538

## Description

### DOMAINE TECHNIQUE

La présente invention se rapporte au domaine des turbomachines, notamment pour aéronef, et concerne plus particulièrement un dispositif pour le centrage et le guidage en rotation d'un arbre de turbomachine, comprenant un palier du type couramment appelé « palier souple ». Dans un palier de ce type, les moyens de raccordement de la bague extérieure du palier au support de palier comprennent une bride de fixation montée sur le support de palier et des moyens élastiquement déformables reliant la bague extérieure du palier à la bride de fixation.

L'invention est notamment applicable aux paliers amortis au moyen d'un film d'huile, également dénommé *« squeeze film ».*

L'invention concerne également un procédé d'assemblage d'un tel dispositif.

### ÉTAT DE LA TECHNIQUE ANTÉRIEURE

Dans une turbomachine, la survenue d'un évènement comme la perte d'une aube de soufflante ou le grippage d'un palier par manque d'huile induit des efforts très importants sur les paliers de la turbomachine.

De tels efforts peuvent entraîner une rupture des moyens élastiquement déformables reliant la bague extérieure d'un palier de type « souple » à la bride assurant la fixation du palier sur le support de palier. Ces moyens élastiquement déformables sont en général constitués d'une partie couramment dénommée « cage souple » ou « cage d'écureuil ».

Lors de leur rupture, les moyens élastiquement déformables cessent d'assurer le maintien en place de la bague du palier, que ce soit axialement ou tangentiellement. Si des moyens appropriés ne sont pas prévus, la fonction roulement n'est plus assurée, ce qui entraine une dégradation rapide du palier et des pièces environnantes. Le palier ne peut alors plus assurer le fonctionnement du moteur, notamment en phase de moulinet ou *« windmilling ».*

Pour permettre d'assurer la retenue axiale de la bague extérieure du palier par rapport au support du palier même lorsque les moyens élastiquement déformables qui raccordent la bague extérieure du palier au support de palier sont rompus, différentes solutions ont été proposées.

Une solution connue consiste à interposer des moyens de rétention axiale de la bague extérieure entre le support de palier et une extrémité amont de la bague. Ces moyens de rétention axiale prennent la forme d'une pluralité de pattes radiales montées par boulons sur une extrémité amont du support de palier, et formant des butées axiales pour une extrémité amont de la bague extérieure. Cette solution technique est critiquable en ce qu'elle provoque un encombrement et une masse globale importante, notamment en raison de la nécessité d'étendre la bague extérieure de palier vers l'amont, afin d'offrir une surface de butée aux pattes radiales portées par le support de palier. Effectivement, cette extension de bague vers l'amont se justifie par le besoin pour celle-ci de s'étendre au-delà de la frette dans laquelle elle est logée, dans le but de recevoir les pattes radiales portées par le support de palier entourant la frette.

Cette extension vers l'amont de la bague extérieure de palier s'avère parfois même impossible à réaliser, en raison de problèmes d'encombrement dans cette zone déjà très dense de la turbomachine.

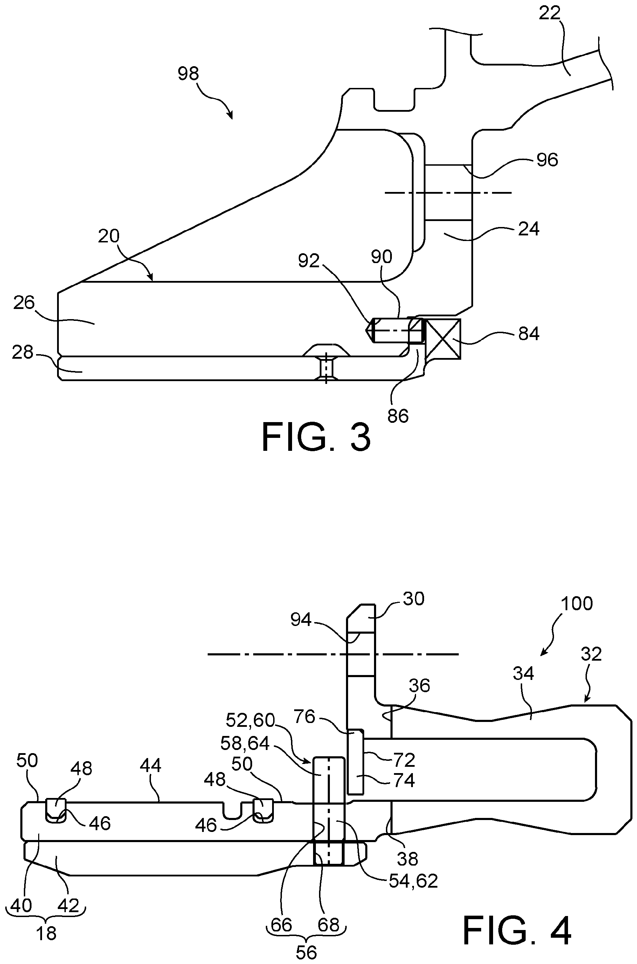

Une autre solution proposée dans le document FR 2960907 consiste à assurer la rétention axiale de la bague extérieure d'un palier au moyen de pions engagés conjointement dans une gorge de la bague extérieure et dans des orifices d'une extension aval de la frette du palier (voir par exemple la figure 3 du document précité).

Toutefois, cette dernière solution requiert une procédure d'assemblage complexe. En effet, les pions doivent être montés selon la direction radiale allant de l'intérieur vers l'extérieur. Le montage des pions ne peut être réalisé qu'après avoir monté la bague extérieure du palier dans son support, et l'encombrement de ce dernier complique alors la tâche. De même, pour le démontage, il faut arracher les pions avant de pouvoir retirer la bague extérieure du palier de son support, ce qui présente un risque d'endommagement de ces éléments. Par ailleurs, pour rendre les pions imperdables, il faut pouvoir tourner la bague extérieure du palier dans son support, alors qu'elle est déjà dans sa position axiale finale. Une telle opération interdit un montage serré de la bague extérieure dans son support, qui est pourtant souhaitable.

### EXPOSÉ DE L'INVENTION

L'invention a notamment pour but d'apporter une solution simple, économique et efficace à au moins une partie de ces problèmes.

Elle propose à cet effet un dispositif pour le centrage et le guidage en rotation d'un arbre de turbomachine, comprenant :
- un palier de roulement comprenant une bague extérieure ;
- un support de palier entourant la bague extérieure ;
- une frette interposée entre la bague extérieure et le support de palier ;
- des moyens de raccordement de la bague extérieure au support de palier, les moyens de raccordement comprenant une bride de fixation annulaire montée sur le support de palier et des moyens élastiquement déformables reliant la bague extérieure à la bride de fixation ; et
- des moyens de rétention pour retenir axialement la bague extérieure en cas de rupture desdits moyens élastiquement déformables.

Selon l'invention, les moyens de rétention comprennent :
- des premiers moyens distincts de la frette et présentant une partie radialement interne engagée dans au moins un évidement formé dans une surface radialement externe de la bague extérieure, et une partie radialement externe s'étendant en saillie radialement vers l'extérieur par rapport à la surface radialement externe de la bague extérieure de sorte qu'en cas de rupture des moyens élastiquement déformables, la bride de fixation s'oppose à un déplacement axial de ladite partie radialement externe des premiers moyens dans une première direction orientée en direction des moyens élastiquement déformables, et le support de palier s'oppose à un déplacement axial de ladite partie radialement externe des premiers moyens dans une seconde direction opposée à la première direction, et
- un élément de rétention distinct de la frette et agencé axialement en regard de la partie radialement externe des premiers moyens de manière à former une butée s'opposant au déplacement axial des premiers moyens dans ladite première direction.

Le dispositif selon l'invention permet ainsi d'assurer une rétention axiale de la bague extérieure de palier en cas de rupture des moyens élastiquement déformables, dans les deux directions, tout en étant particulièrement simple à assembler du fait que ledit élément de rétention qui assure la rétention des premiers moyens dans la première direction, est un élément distinct de la frette.

De préférence, l'élément de rétention est un anneau de rétention distinct de la frette et présentant une partie radialement interne s'étendant à distance de la bague extérieure et formant une butée s'opposant au déplacement axial de ladite partie radialement externe des premiers moyens dans ladite première direction en cas de rupture des moyens élastiquement déformables, et une partie radialement externe interposée axialement entre le support de palier et la bride de fixation.

L'anneau de rétention présente avantageusement une extrémité radialement externe montée serrée dans une surface annulaire de la bride de fixation délimitée axialement par un épaulement annulaire de la bride de fixation s'opposant à un déplacement axial de l'anneau de rétention dans ladite première direction.

En variante, la partie radialement externe de l'anneau de rétention peut être pourvue d'orifices traversés par des organes de fixation de la bride de fixation au support de palier.

Par ailleurs, dans un mode de réalisation préféré de l'invention, les premiers moyens prennent la forme d'une pluralité de pions de rétention présentant chacun une partie radialement interne montée serrée dans un orifice correspondant de la bague extérieure, et une partie radialement externe faisant saillie depuis la surface radialement externe de la bague extérieure de manière à s'étendre axialement en regard de la partie radialement interne de l'anneau de rétention.

Dans ce cas, la partie radialement externe de chacun des pions de rétention est avantageusement positionnée entre deux ergots correspondants solidaires du support de palier, de sorte que les ergots limitent la rotation de la bague extérieure en cas de rupture des moyens élastiquement déformables.

Dans un autre mode de réalisation préféré de l'invention, les premiers moyens prennent la forme d'un élément annulaire présentant une partie radialement interne engagée dans une gorge annulaire de la bague extérieure, et une partie radialement externe faisant saillie depuis la surface radialement externe de la bague extérieure de manière à s'étendre axialement en regard de la partie radialement interne de l'anneau de rétention.

Dans encore un autre mode de réalisation préféré de l'invention, l'élément de rétention est ladite bride de fixation, et les premiers moyens prennent la forme d'un anneau formé d'au moins deux secteurs d'anneau montés bout-à-bout circonférentiellement et présentant une partie radialement interne engagée dans une gorge annulaire de la bague extérieure, et une partie radialement externe pourvue d'orifices traversés par des organes de fixation de la bride de fixation au support de palier.

L'invention concerne également une turbomachine comprenant au moins un dispositif du type décrit ci-dessus.

L'invention concerne encore un procédé d'assemblage d'un dispositif du type décrit ci-dessus, comprenant au moins les étapes consistant à :
- mettre à disposition un premier ensemble solide formé par le support de palier et la frette préalablement montée dans ce dernier,
- mettre à disposition la bague extérieure et les moyens de raccordement solidaires de la bague extérieure ainsi que l'élément de rétention ;
- déplacer lesdits premiers moyens radialement de l'extérieur vers l'intérieur par rapport à un axe de révolution de la bague extérieure, de manière à insérer ladite partie radialement interne des premiers moyens dans le ou chaque évidement correspondant formé dans la bague extérieure, et obtenir ainsi un deuxième ensemble solide comprenant la bague extérieure, les moyens de raccordement, l'élément de rétention, et les premiers moyens, puis

- déplacer le deuxième ensemble solide par rapport audit premier ensemble solide jusqu'à ce que la bague extérieure soit entourée par le support de palier, puis
- fixer ladite bride de fixation sur le support de palier.

Les premiers moyens, et plus généralement les moyens de rétention, sont donc préassemblés aux moyens de raccordement solidaires de la bague extérieure, de manière à former un ensemble indissociable, ce dernier ensemble pouvant ensuite être assemblé d'une manière conventionnelle audit premier ensemble, en particulier au support de palier.

L'invention offre ainsi un procédé d'assemblage particulièrement simple.

De plus, le pré-assemblage des moyens de rétention aux moyens de raccordement peut être opéré par une première entité, telle qu'un fabriquant de pièces détachées, alors que l'assemblage final peut être opéré par une deuxième entité, telle qu'un fabriquant de turbomachines. Dans ce cas, l'invention permet à la deuxième entité de conserver une méthode d'assemblage finale conventionnelle.

Le cas échéant, le procédé comprend avantageusement l'étape consistant à mettre en place l'anneau de rétention autour de la bague extérieure avant l'étape de déplacement et d'insertion des premiers moyens dans la bague extérieure, de sorte que ladite partie radialement interne de l'anneau de rétention soit agencée axialement entre au moins une partie de la bride de fixation et le ou chaque évidement destiné à recevoir la partie radialement interne des premiers moyens.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un dispositif pour le centrage et le guidage en rotation d'un arbre de turbomachine, selon un premier mode de réalisation préféré de l'invention ;
- la figure 2 est une vue à plus grande échelle du détail II de la figure 1 ;
- la figure 3 est une demi-vue schématique en section axiale d'un premier ensemble formé par un support de palier et une frette, au cours de l'assemblage du dispositif de la figure 1 ;
- la figure 4 est une demi-vue schématique en section axiale d'un deuxième ensemble formé par une bague extérieure de palier et des moyens destinés au raccordement de la bague extérieure au support de palier, au cours de l'assemblage du dispositif de la figure 1 ;
- la figure 5 est une demi-vue schématique partielle en coupe axiale d'un dispositif pour le centrage et le guidage en rotation d'un arbre de turbomachine, selon un deuxième mode de réalisation préféré de l'invention ;
- la figure 6 est une demi-vue schématique partielle en coupe axiale d'un dispositif pour le centrage et le guidage en rotation d'un arbre de turbomachine, selon un troisième mode de réalisation préféré de l'invention ;
- la figure 7 est une demi-vue schématique partielle en coupe axiale d'un dispositif pour le centrage et le guidage en rotation d'un arbre de turbomachine, selon un quatrième mode de réalisation préféré de l'invention ;
- la figure 8 est une demi-vue schématique partielle en coupe axiale d'un dispositif pour le centrage et le guidage en rotation d'un arbre de turbomachine, selon un cinquième mode de réalisation préféré de l'invention ;
- la figure 9 est une vue schématique partielle de face de deux secteurs d'anneau destinés à former un anneau du dispositif de la figure 8.

Dans l'ensemble de ces figures, des références identiques peuvent désigner des éléments identiques ou analogues.

### EXPOSÉ DÉTAILLÉ DE MODES DE RÉALISATION PRÉFÉRÉS

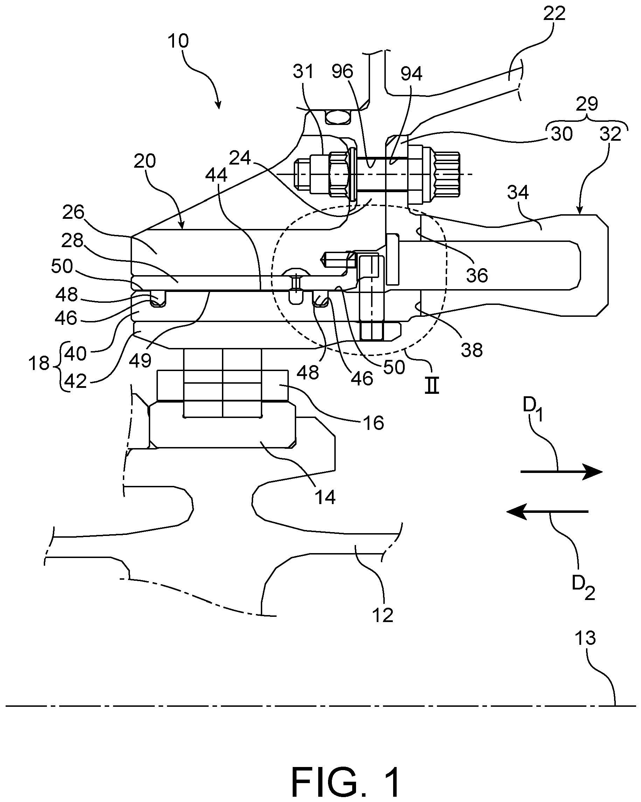

La figure 1 illustre une partie d'un dispositif 10 pour le centrage et le guidage en rotation d'un arbre 12 dans une turbomachine, selon un premier mode de réalisation préféré de l'invention.

Dans la description qui suit, les directions « amont » et « aval » sont définies par rapport à un sens général d'écoulement des gaz parallèlement à un axe 13 de l'arbre 12 correspondant à un axe de la turbomachine, et les directions radiales « vers l'intérieur » et « vers l'extérieur » sont définies par rapport à l'axe 13.

Ce dispositif 10 comprend un palier formé d'une bague intérieure 14 solidaire de l'arbre 12, un roulement 16, et une bague extérieure 18 solidaire d'un support de palier 20 de forme globalement annulaire.

Le support de palier 20 comporte une paroi tronconique 22 destinée à être raccordée à un carter de la turbomachine ou à un autre support de palier s'étendant coaxialement à l'arbre 12, une bride annulaire 24 s'étendant radialement vers l'intérieur depuis une extrémité amont de la paroi tronconique 22, et une partie amont 26 cylindrique de révolution s'étendant vers l'amont depuis une extrémité radialement interne de la bride annulaire 24.

Le dispositif 10 comporte une frette 28 montée serrée dans la partie amont 26 du support de palier 20.

Le dispositif 10 comporte en outre des moyens 29 de raccordement de la bague extérieure 18 au support de palier 20. Ces moyens comportent une bride de fixation 30 annulaire fixée, par exemple au moyen de boulons 31, sur la bride annulaire 24 du support de palier, et des moyens élastiquement déformables 32 constitués d'une rangée annulaire de languettes ou « colonnettes » 34 en forme de U ouvert vers l'amont, formant un ensemble du type couramment dénommé « cage souple » ou « cage d'écureuil ». Ces languettes 34 présentent une extrémité amont supérieure 36 raccordée à la bride de fixation 30, et une extrémité amont inférieure 38 raccordée à la bague extérieure 18 du palier.

Dans l'exemple illustré, la bague extérieure 18 est formée de deux parties coaxiales, à savoir un support annulaire 40 raccordé à l'extrémité amont inférieure 38 des languettes 34, et une piste de roulement 42 montée serrée dans le support annulaire 40. En variante, la bague extérieure 18 peut être réalisée d'un seul tenant, comme cela apparaîtra plus clairement dans ce qui suit.

La bague extérieure 18 présente une surface annulaire radialement externe 44 de forme globalement cylindrique de révolution, et pourvue de deux gorges 46 dans lesquelles sont logés respectivement deux segments annulaires d'étanchéité 48 délimitant axialement un espace annulaire 49 destiné à recevoir un film d'huile. Dans l'exemple illustré, les deux gorges 46 sont formées dans le support annulaire 40 de la bague extérieure 18 et sont disposées entre deux portées annulaires 50 de la bague extérieure, couramment appelées « portées de butée », au droit desquelles le jeu entre la bague extérieure 18 et la frette 28 définit la course radiale du palier souple. Ce jeu est inférieur à l'épaisseur du film d'huile mais suffisant pour conserver la fonction amortissante de celui-ci jusqu'à ce que le palier souple soit en butée sous effort radial.

Le dispositif 10 comporte en outre des moyens de rétention pour retenir axialement la bague extérieure 18 en cas de rupture des moyens élastiquement déformables 32, en particulier en cas de rupture d'une ou plusieurs languettes 34.

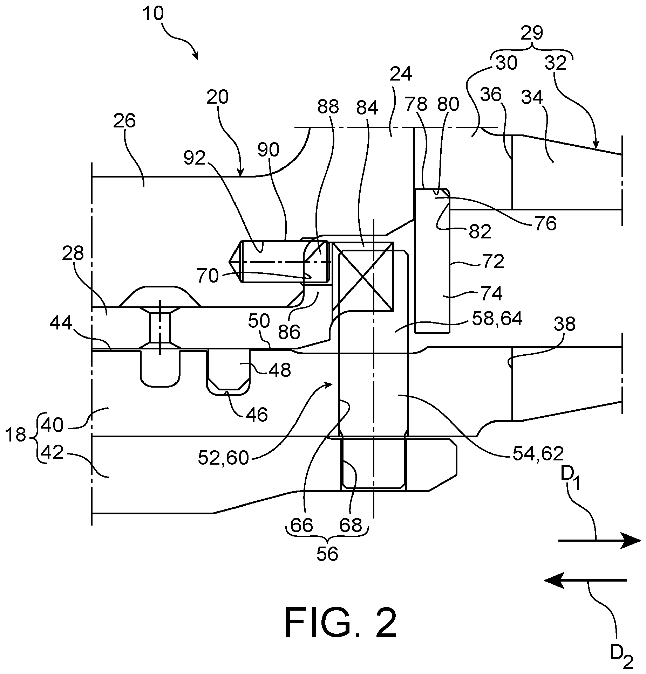

La figure 2 illustre à plus grande échelle les moyens de rétention précités.

Selon la présente invention, ces moyens de rétention comprennent des premiers moyens 52 distincts de la frette 28 et présentant une partie radialement interne 54 engagée dans au moins un évidement 56 formé dans la surface radialement externe 44 de la bague extérieure 18, et une partie radialement externe 58 s'étendant en saillie radialement vers l'extérieur par rapport à la surface radialement externe 44 de la bague extérieure 18. Les moyens de rétention comprennent en outre un élément de rétention distinct de la frette et agencé axialement en regard de la partie radialement externe 58 des premiers moyens 52, comme cela apparaîtra plus clairement dans ce qui suit.

Dans le premier mode de réalisation préféré de l'invention, les premiers moyens 52 prennent la forme d'une rangée annulaire de pions de rétention 60 présentant chacun une partie radialement interne 62 montée serrée dans la bague extérieure 18, et une partie radialement externe 64 faisant saillie depuis la surface radialement externe 44 de la bague extérieure 18. Plus précisément, la partie radialement interne 62 de chaque pion de rétention 60 s'étend au travers d'un orifice 66 correspondant du support annulaire 40, et présente une extrémité radialement interne insérée dans un orifice correspondant 68 de la piste de roulement 42. Ceci permet de maintenir en place la piste de roulement 42 dans le support annulaire 40 même en cas de perte du serrage entre ces deux pièces. Chaque orifice 68 de la piste de roulement 42 présente un diamètre en section légèrement plus petit que le diamètre en section de l'orifice 66 correspondant du support annulaire 40, et la partie radialement interne 62 de chaque pion de rétention 60 présente un rétrécissement de sa section de manière à bloquer le pion de rétention 60 dans la direction radiale vers l'intérieur, pour empêcher le pion de rétention 60 de sortir de son logement en cas de perte du serrage entre le pion de rétention 60 et l'orifice 66, afin qu'il ne risque pas d'endommager le roulement.

Les parties radialement externes 64 respectives des pions de rétention 60 s'étendent dans un espace annulaire délimité par un épaulement 70 formé à la base de la bride annulaire 24 du support de palier.

Dans le premier mode de réalisation préféré de l'invention, l'élément de rétention précité est un anneau de rétention 72 distinct de la frette 28 et présentant une partie radialement interne 74 s'étendant à distance de la bague extérieure 18 et formant une butée s'opposant au déplacement axial de la partie radialement externe 58 des premiers moyens 52 dans une première direction D1 orientée en direction des moyens élastiquement déformables 32, en l'occurrence orientée vers l'aval, et une partie radialement externe 76 interposée axialement entre le support de palier 20 et la bride de fixation 30.

Les pions de rétention 60 s'étendent ainsi axialement en regard de la partie radialement interne 74 de l'anneau de rétention 72.

L'anneau de rétention 72 est retenu axialement par la bride de fixation 30 dans la première direction D1, c'est-à-dire en direction de l'aval. L'anneau de rétention 72 forme ainsi une butée s'opposant au déplacement axial des premiers moyens 52 dans la première direction D1.

Ainsi, il apparaît clairement qu'en cas de rupture des moyens élastiquement déformables 32, la bride de fixation 30 s'oppose à un déplacement axial de la partie radialement externe 58 des premiers moyens 52 dans la première direction D1, tandis que la bride annulaire 24 du support de palier 20 s'oppose à un déplacement axial de la partie radialement externe 58 des premiers moyens 52 dans une seconde direction D2 opposée à la première direction D1, en l'occurrence orientée vers l'amont.

Bien entendu, les première et seconde directions D1 et D2 précitées peuvent être inversées eu égard aux directions amont et aval, moyennant une inversion de la configuration du dispositif 10 selon l'invention.

Dans l'exemple illustré, l'anneau de rétention 72 présente une extrémité radialement externe 78 montée serrée dans une surface annulaire 80 de la bride de fixation 30 délimitée axialement par un épaulement annulaire 82 de la bride de fixation s'opposant à un déplacement axial de l'anneau de rétention 72 dans ladite première direction D1, en l'occurrence vers l'aval.

Dans le premier mode de réalisation préféré de l'invention, une rangée annulaire d'ergots 84 solidaires du support de palier 20 est agencée de sorte que la partie radialement externe 64 de chacun des pions de rétention 60 est positionnée entre deux des ergots 84. Dans l'exemple illustré, les ergots 84 forment l'extrémité d'une extension 86 vers l'aval de la frette 28.

La coopération des ergots 84 avec les pions de rétention 60 permet ainsi de limiter la rotation de la bague extérieure 18 en cas de rupture des moyens élastiquement déformables 32.

L'extension 86 de la frette 28 comporte au moins un évidement 88 coopérant avec un pion détrompeur 90 monté serré dans un orifice 92 formé dans l'épaulement 70 du support de palier 20. Le pion détrompeur 90 permet d'indexer la position angulaire de la frette 28, et donc des ergots 84, par rapport au support de palier 20. De préférence, chaque pion détrompeur 90 est sensiblement aligné avec un des pions de rétention 60, qui l'empêche ainsi de sortir de son logement même en cas de perte du serrage avec l'orifice 92, afin qu'il ne puisse pas aller endommager le roulement. Par ailleurs, l'indexation angulaire des pions 60 par rapport au support de palier 20 est assurée par la mise en référence d'orifices 94 de la bride de fixation 30 appartenant aux moyens de raccordement 29 avec des orifices 96 de la bride annulaire 24 appartenant au support de palier 20. Certains des orifices 94 et 96 sont destinés au passage des boulons 31 tandis que d'autres de ces orifices peuvent être destinés au passage de canaux d'amenée de lubrifiant ou de canaux de ventilation, ou encore destinés à coopérer avec des outils pour faciliter la séparation des moyens de raccordement 29 et du support de palier 20 lors du démontage du dispositif 10.

Le dispositif 10 des figures 1 et 2 peut être assemblé de la manière suivante.

D'une part, le pion détrompeur 90 est inséré dans l'orifice 92 du support de palier 20 et est par exemple rendu solidaire du support de palier 20 par une technique de dilatation/contraction thermique, puis la frette 28 est montée serrée dans l'alésage formé par la partie amont 26 du support de palier 20, par exemple par dilatation/contraction thermique. La mise en place de la frette 28 s'effectue en déplaçant celle-ci vers l'amont, c'est à dire dans la seconde direction D2, tout en veillant à aligner angulairement l'évidement 88 avec le pion détrompeur 90, jusqu'à ce que le pion détrompeur 90 s'engage dans l'évidement 88. Un premier ensemble solide 98 visible sur la figure 3 et comprenant le support de palier 20 et la frette 28 est ainsi obtenu.

D'autre part, la bague extérieure 18 est solidarisée aux moyens de raccordement 29. Dans l'exemple particulier décrit ci-dessus, la bague extérieure 18 est formée de deux parties, à savoir le support annulaire 40 qui est réalisé d'un seul tenant avec les moyens de raccordement 29, et la piste de roulement 42 qui est montée frettée dans l'alésage du support annulaire 40, par exemple par dilatation/contraction thermique.

Ensuite, l'anneau de rétention 72 est déplacé axialement vers l'aval autour de la bague extérieure 18 puis est monté serré dans la surface annulaire 80 de la bride de fixation 30, par exemple également par dilatation/contraction thermique.

A ce moment, la partie radialement interne 74 de l'anneau de rétention 72 est agencée axialement entre l'épaulement annulaire 82 de la bride de fixation 30 et chaque évidement 56 destiné à recevoir la partie radialement interne 54 des premiers moyens 52.

Ensuite, les pions de rétention 60 sont déplacés radialement de l'extérieur vers l'intérieur et les parties radialement internes 62 respectives des pions de rétention 60 sont montées dans les orifices 66, 68, par exemple par dilatation/contraction thermique.

D'autre part, les segments d'étanchéité 48 sont le cas échéant mis en place dans les gorges 46 de la bague extérieure 18.

Ensuite, un deuxième ensemble solide 100 formé par la bague extérieure 18, les moyens de raccordement 29, l'anneau de rétention 72, les pions de rétention 60 et les segments d'étanchéité 48 (figure 4) est positionné angulairement de manière à faire correspondre les orifices 94 de la bride de fixation 30 avec les orifices 96 de la bride annulaire 24 du support de palier 20. Puis ce deuxième ensemble solide 100 est déplacé axialement vers l'amont jusqu'à ce que la bague extérieure 18 soit entourée par la partie amont 26 du support de palier 20. Lorsque la bride de fixation 30 est appliquée sur la bride annulaire 24 du support de palier 20, ces deux brides sont fixées l'une à l'autre au moyen des boulons 31 (figure 1).

Il est à noter que l'un ou plusieurs des montages par dilatation/contraction thermique peuvent être remplacés par des montages par collage, sertissage, vissage, ou encore par soudage, ou toute autre technique appropriée.

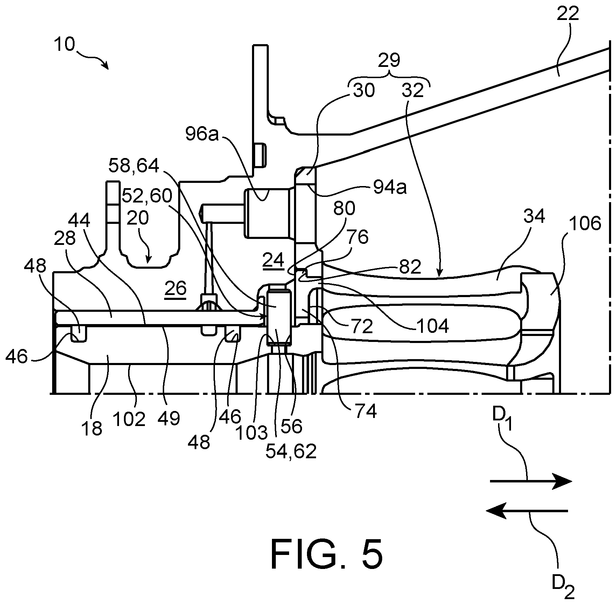

La figure 5 illustre un deuxième mode de réalisation préféré de l'invention globalement semblable au premier mode de réalisation décrit ci-dessus, mais dans lequel la frette 28 est dépourvue d'extension vers l'aval, et donc d'ergots susceptibles de bloquer les pions de rétention dans la direction tangentielle.

De plus, dans l'exemple illustré sur la figure 5 ainsi que dans les exemples suivants, la bague extérieure 18 est formée d'une seule pièce présentant la surface annulaire radialement externe 44 et une surface radialement interne 102 formant piste de roulement. Dans ce cas, le ou les évidements 56 peuvent être traversants ou borgnes. Dans l'exemple de la figure 5, pour des raisons de simplicité de fabrication, les évidements 56 prennent la forme d'orifices traversants pourvus d'un rétrécissement de section 103 permettant de garantir la retenue des pions de rétention 60 dans la direction radiale vers l'intérieur.

En outre, dans cet exemple, l'anneau de rétention 72 comporte une collerette axiale 104 permettant de renforcer sa liaison avec les moyens de raccordement 29.

Enfin, dans l'exemple illustré sur la figure 5 ainsi que dans les exemples suivants, les moyens élastiquement déformables 32 comprennent un anneau de renfort 106 reliant les extrémités aval respectives des languettes 34. Un tel anneau de renfort pourrait bien entendu équiper le dispositif de la figure 1.

Il est à noter que l'orifice 94a de la bride de fixation 30 et l'orifice 96a de la bride annulaire 24 visibles sur la figure 5 ne sont pas des orifices de passage pour un boulon 31 mais des orifices de circulation pour de l'huile destinée à former le film d'huile entre la frette 28 et la bague extérieure 18.

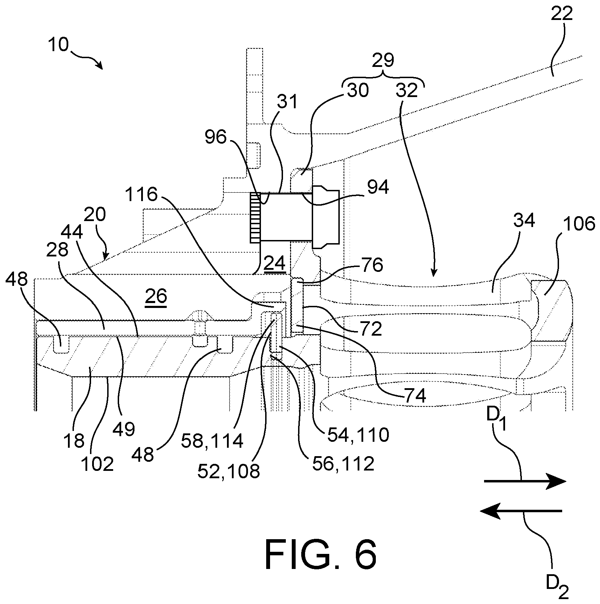

La figure 6 illustre un troisième mode de réalisation préféré de l'invention, globalement semblable au premier mode de réalisation décrit ci-dessus, mais dans lequel les premiers moyens 52 ne prennent pas la forme d'une rangée annulaire de pions de rétention mais prennent la forme d'un élément annulaire 108 présentant une partie radialement interne 110 engagée dans une gorge annulaire 112 de la bague extérieure 18, et une partie radialement externe 114 faisant saillie depuis la surface radialement externe 44 de la bague extérieure de manière à s'étendre axialement en regard de la partie radialement interne 74 de l'anneau de rétention 72.

L'élément annulaire 108 prend par exemple la forme d'un anneau élastique, c'est à dire un anneau métallique fendu et précontraint.

Le montage de l'élément annulaire 108 se fait alors par ouverture de cet élément le temps du déplacement de celui-ci vers l'aval autour de la bague extérieure 18, puis par relâchement de l'élément annulaire lorsque ce dernier se trouve au droit de la gorge annulaire 112 de sorte que l'élément annulaire s'engage dans la gorge annulaire 112.

De plus, pour limiter les risques de désengagement de l'élément annulaire 108, la frette 28 comporte une extension 116 vers l'aval, qui recouvre une extrémité radialement externe de l'élément annulaire 108 lorsque ce dernier est engagé dans la gorge annulaire 112.

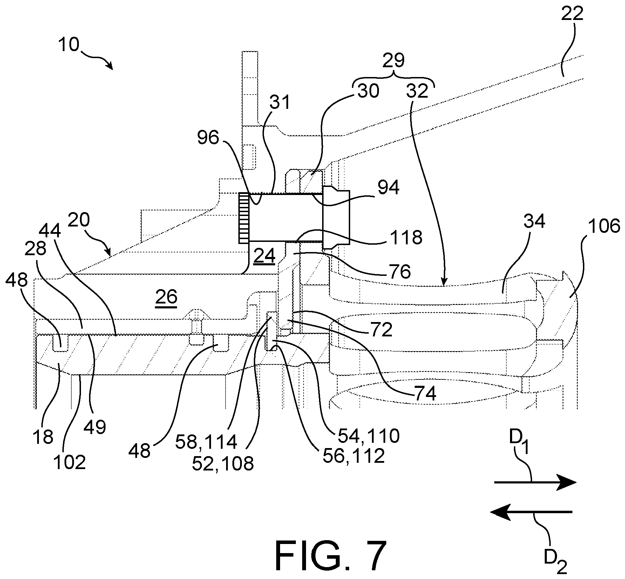

La figure 7 illustre un quatrième mode de réalisation préféré de l'invention, globalement semblable au troisième mode de réalisation décrit ci-dessus, mais dans lequel la partie radialement externe 76 de l'anneau de rétention 72 est pourvue d'orifices 118 traversés par les boulons 31 assurant la fixation de la bride de fixation 30 au support de palier 20.

A titre illustratif, la partie radialement externe 76 de l'anneau de rétention 72 s'étend radialement vers l'extérieur jusqu'au niveau d'une extrémité radialement externe de la bride de fixation 30.

Dans l'exemple illustré, la frette 28 est dépourvue d'extension vers l'aval analogue à l'extension 116 de la figure 6.

L'assemblage du dispositif selon ce quatrième mode de réalisation est réalisé de manière analogue à l'assemblage du dispositif selon le troisième mode de réalisation de l'invention, sauf en ce qui concerne l'anneau de rétention 72 qui n'est pas serré dans la bride de fixation 30, mais qui est simplement disposé autour de la bague extérieure 18, à proximité de la bride de fixation 30, de préférence au contact de cette dernière, avant que les premiers moyens 52 ne soient engagés dans l'évidement 56. Dans l'exemple illustré, l'engagement des premiers moyens 52 consiste en l'engagement de la partie radialement interne 110 de l'élément annulaire 108 dans la gorge annulaire 112 de la bague extérieure 18.

Les premiers moyens 52 permettent ensuite de retenir axialement l'anneau de rétention 72 tant que le deuxième ensemble solide précité n'est pas fixé au premier ensemble solide au moyen des boulons 31.

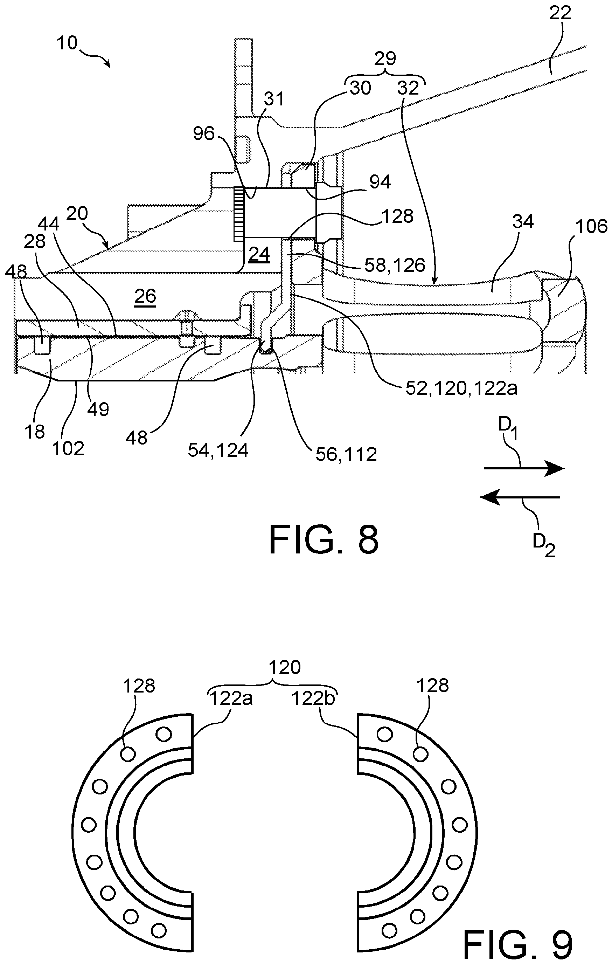

La figure 8 illustre un cinquième mode de réalisation préféré de l'invention, globalement semblable au quatrième mode de réalisation décrit ci-dessus, mais dans lequel l'élément de rétention précité est ladite bride de fixation 30, et les premiers moyens 52 prennent la forme d'un anneau 120 formé d'au moins deux secteurs d'anneau 122a, 122b (figure 9) montés bout-à-bout circonférentiellement et présentant une partie radialement interne 124 engagée dans la gorge annulaire 112 de la bague extérieure 18 (figure 8), et une partie radialement externe 126 pourvue d'orifices 128 traversés par les organes de fixation de la bride de fixation 30 au support de palier 20, c'est-à-dire dans l'exemple illustré, par les boulons 31.

Dans le dispositif 10 selon ce cinquième mode de réalisation, l'élément de rétention n'est donc pas constitué d'un anneau de rétention indépendant des premiers moyens 52 comme l'est l'anneau de rétention 72 des figures 1 à 7.

L'anneau 120 formant lesdits premiers moyens remplit à la fois la fonction de rétention de la bague extérieure 18 et la fonction de rétention vis-à-vis du support de palier 20 et de la bride de fixation 30 appartenant aux moyens de raccordement 29.

L'assemblage du dispositif 10 de la figure 8 est globalement semblable à l'assemblage des dispositifs décrits ci-dessus, mais la mise en place des premiers moyens 52 comprend le positionnement des secteurs d'anneau 122a, 122b autour de la bague extérieure 18 de manière à engager ces secteurs d'anneau dans la gorge annulaire 112 tout en positionnant angulairement les secteurs d'anneau de manière à aligner leurs orifices 128 avec des orifices 94 correspondants de la bride de fixation 30. Puis les boulons 31, ou des organes de fixation de tout autre type approprié, sont insérés au travers des orifices 94 et 128 afin de retenir radialement les secteurs d'anneau 122a, 122b.

Le deuxième ensemble solide ainsi formé peut ensuite être assemblé au support de palier 20 de la manière décrite ci-dessus.

Dans l'ensemble des modes de réalisation de l'invention décrits ci-dessus, les moyens de rétention précités permettent d'assurer une rétention de la bague extérieure 18 dans les deux directions axiales opposées D1, D2. Du fait que l'élément de rétention 72, 30 qui assure la rétention des premiers moyens 52 dans la première direction D1 est un élément distinct de la frette 28 solidaire du support de palier, l'assemblage du dispositif peut être opéré d'une manière particulièrement simple et efficace.

## Revendications

1. Dispositif (10) pour le centrage et le guidage en rotation d'un arbre (12) de turbomachine, comprenant :
- un palier de roulement comprenant une bague extérieure (18) ;
- un support de palier (20, 24, 26) entourant la bague extérieure ;
- une frette (28) interposée entre la bague extérieure et le support de palier ;
- des moyens de raccordement de la bague extérieure au support de palier, les moyens de raccordement comprenant une bride de fixation (30) annulaire montée sur le support de palier (20) et des moyens élastiquement déformables (32) reliant la bague extérieure (18) à la bride de fixation (30) ; et
- des moyens de rétention pour retenir axialement la bague extérieure (18) en cas de rupture desdits moyens élastiquement déformables (32) ;
**caractérisé en ce que** les moyens de rétention comprennent :
- des premiers moyens (52,108,120) distincts de la frette (28) et présentant une partie radialement interne (54,62,74,102,110,124) engagée dans au moins un évidement (56,88) formé dans une surface radialement externe (44) de la bague extérieure, et une partie radialement externe (58,64,114,126) s'étendant en saillie radialement vers l'extérieur par rapport à la surface radialement externe (44) de la bague extérieure de sorte qu'en cas de rupture des moyens élastiquement déformables (32), la bride de fixation (30) s'oppose à un déplacement axial de ladite partie radialement externe (58) des premiers moyens dans une première direction (D1) orientée en direction des moyens élastiquement déformables (32), et le support de palier (24) s'oppose à un déplacement axial de ladite partie radialement externe (58,64,114,126) des premiers moyens dans une seconde direction (D2) opposée à la première direction, et
- un élément de rétention (72, 30) distinct de la frette (28) et agencé axialement en regard de la partie radialement externe (58,64,114,126) des premiers moyens (52) de manière à former une butée s'opposant au déplacement axial des premiers moyens (52) dans ladite première direction (D1).

2. Dispositif selon la revendication 1, dans lequel l'élément de rétention est un anneau de rétention (72) distinct de la frette (28) et présentant une partie radialement interne (74) s'étendant à distance de la bague extérieure (18) et formant une butée s'opposant au déplacement axial de ladite partie radialement externe (58) des premiers moyens dans ladite première direction (D1) en cas de rupture des moyens élastiquement déformables (32), et une partie radialement externe (76) interposée axialement entre le support de palier (24) et la bride de fixation (30).

3. Dispositif selon la revendication 2, dans lequel l'anneau de rétention (72) présente une extrémité radialement externe (78) montée serrée dans une surface annulaire (80) de la bride de fixation (30) délimitée axialement par un épaulement annulaire (82) de la bride de fixation s'opposant à un déplacement axial de l'anneau de rétention dans ladite première direction (D1).

4. Dispositif selon la revendication 2, dans lequel la partie radialement externe (76) de l'anneau de rétention (72) est pourvue d'orifices (118) traversés par des organes (31) de fixation de la bride de fixation (30) au support de palier (24).

5. Dispositif selon l'une quelconque des revendications 2 à 4, dans lequel les premiers moyens (52) prennent la forme d'une pluralité de pions de rétention (60) présentant chacun une partie radialement interne (62) montée serrée dans un orifice correspondant (66, 68) de la bague extérieure (18), et une partie radialement externe (64) faisant saillie depuis la surface radialement externe (44) de la bague extérieure de manière à s'étendre axialement en regard de la partie radialement interne (74) de l'anneau de rétention (72).

6. Dispositif selon la revendication 5, dans lequel la partie radialement externe (64) de chacun des pions de rétention (60) est positionnée entre deux ergots correspondants (84) solidaires du support de palier (20), de sorte que les ergots (84) limitent la rotation de la bague extérieure (18) en cas de rupture des moyens élastiquement déformables (32).

7. Dispositif selon l'une quelconque des revendications 2 à 4, dans lequel les premiers moyens (52) prennent la forme d'un élément annulaire (108) présentant une partie radialement interne (110) engagée dans une gorge annulaire (112) de la bague extérieure (18), et une partie radialement externe (114) faisant saillie depuis la surface radialement externe (44) de la bague extérieure (18) de manière à s'étendre axialement en regard de la partie radialement interne (74) de l'anneau de rétention (72).

8. Dispositif selon la revendication 1, dans lequel l'élément de rétention est ladite bride de fixation (30), et les premiers moyens (52) prennent la forme d'un anneau (120) formé d'au moins deux secteurs d'anneau (122a, 122b) montés bout-à-bout circonférentiellement et présentant une partie radialement interne (124) engagée dans une gorge annulaire (112) de la bague extérieure (18), et une partie radialement externe (126) pourvue d'orifices (128) traversés par des organes (31) de fixation de la bride de fixation (30) au support de palier (24).

9. Turbomachine, **caractérisée en ce qu'**elle comprend au moins un dispositif selon l'une quelconque des revendications précédentes.

10. Procédé d'assemblage d'un dispositif (10) selon l'une quelconque des revendications 1 à 8, **caractérisé en ce qu'**il comprend au moins les étapes consistant à :
- mettre à disposition un premier ensemble solide (98) formé par le support de palier (20, 24, 26) et la frette (28) préalablement montée dans ce dernier,
- mettre à disposition la bague extérieure (18) et les moyens de raccordement (29) solidaires de la bague extérieure ainsi que l'élément de rétention (72, 30) ;
- déplacer lesdits premiers moyens (52) radialement de l'extérieur vers l'intérieur par rapport à un axe de révolution (13) de la bague extérieure, de manière à insérer ladite partie radialement interne (54,62,74,102,110,124) des premiers moyens dans le ou chaque évidement (56) correspondant formé dans la bague extérieure, et obtenir ainsi un deuxième ensemble solide (100) comprenant la bague extérieure (18), les moyens de raccordement (29), l'élément de rétention (72, 30) et les premiers moyens (52), puis
- déplacer le deuxième ensemble solide (100) par rapport audit premier ensemble solide (98) jusqu'à ce que la bague extérieure (18) soit entourée par le support de palier (26), puis
- fixer ladite bride de fixation (30) sur le support de palier (24).

11. Procédé selon la revendication 10 d'assemblage d'un dispositif selon la revendication 2, comprenant en outre l'étape consistant à mettre en place l'anneau de rétention (72) autour de la bague extérieure (18) avant l'étape de déplacement et d'insertion des premiers moyens (52) dans la bague extérieure, de sorte que ladite partie radialement interne (74) de l'anneau de rétention soit agencée axialement entre au moins une partie (82) de la bride de fixation (30) et le ou chaque évidement (56) destiné à recevoir la partie radialement interne (54) des premiers moyens.

## Patentansprüche

1. Vorrichtung (10) zur Zentrierung und Rotationsführung einer Turbotriebwerk-Welle (12), die enthält:
- ein Wälzlager mit einem Außenring (18),
- eine Lagerstütze (20, 24, 26), die den Außenring umgibt,
- einen Bund (28), der zwischen dem Außenring und der Lagerstütze angeordnet ist,
- Verbindungsmittel zwischen dem Außenring und der Lagerstütze, wobei die Verbindungsmittel einen ringförmigen Befestigungsflansch (30), der an der Lagerstütze (20) angebracht ist, und elastisch verformbare Mittel (32), die den Außenring (18) mit dem Befestigungsflansch (30) verbinden, umfassen, und
- Sperrmittel, um den Außenring (18) im Falle eines Bruchs der genannten elastisch verformbaren Mittel (32) in axialer Richtung zu blockieren,
**dadurch gekennzeichnet,**
**dass** die Sperrmittel umfassen:
- erste Mittel (52, 108, 120), die von dem Bund (28) unterschieden sind und einen radial inneren Teil (54, 62, 74, 102, 110, 124) aufweisen, der sich in Eingriff in wenigstens einer Aussparung (56, 88) befindet, die in einer radial äußeren Oberfläche (44) des Außenrings ausgebildet ist, sowie einen radial äußeren Teil (58, 64, 114, 126) aufweisen, der sich radial hervorragend, bezogen auf die radial äußeren Oberfläche (44) des Außenrings, nach außen erstreckt, so dass im Falle eines Bruchs der genannten elastisch verformbaren Mittel (32) der Befestigungsflansch (30) ein axiales Verschieben des genannten radial äußeren Teils (58) der ersten Mittel in einer ersten Richtung (D1) verhindert, die in Richtung der elastisch verformbaren Mittel (32) ausgerichtet ist, und die Lagerstütze (24) ein axiales Verschieben des genannten radial äußeren Teils (58, 64, 114, 126) der ersten Mittel in einer zweiten Richtung (D2) verhindert, die entgegengesetzt zur ersten Richtung verläuft, und
- ein Sperrelement (72, 30), das von dem Bund (28) unterschieden ist und axial gegenüber dem radial äußeren Teil (58, 64, 114, 126) der ersten Mittel (52) angeordnet ist, so dass es einen Anschlag bildet, der das axiale Verschieben der ersten Mittel (52) in der genannten ersten Richtung (D1) verhindert.

2. Vorrichtung nach Anspruch 1, bei der das Sperrelement ein Sperrring (72) ist, der von dem Bund (28) unterschieden ist und einen radial inneren Teil (74) aufweist, der sich in Abstand zu dem Außenring (18) erstreckt und einen Anschlag bildet, der im Falle eines Bruchs der elastisch verformbaren Mittel (32) das axiale Verschieben des genannten radial äußeren Teils (58) der ersten Mittel in der genannten ersten Richtung (D1) verhindert, sowie einen radial äußeren Teil (76) aufweist, der axial zwischen der Lagerstütze (24) und dem Befestigungsflansch (30) angeordnet ist.

3. Vorrichtung nach Anspruch 2, bei der der Sperrring (72) ein radial äußeres Ende (78) aufweist, das festsitzend in einer ringförmigen Oberfläche (80) des Befestigungsflanschs (30) angebracht ist, die axial durch einen ringförmigen Absatz (82) des Befestigungsflanschs begrenzt ist, der ein axiales Verschieben des Sperrrings in der genannten ersten Richtung (D1) verhindert.

4. Vorrichtung nach Anspruch 2, bei der der radial äußere Teil (76) des Sperrrings (72) mit Öffnungen (118) versehen ist, durch die hindurch Befestigungsorgane (31) zur Befestigung des Befestigungsflanschs (30) an der Lagerstütze (24) verlaufen.

5. Vorrichtung nach einem der Ansprüche 2 bis 4, bei der die ersten Mittel (52) in Form einer Mehrzahl von Sperrstiften (60) ausgeführt sind, die jeweils einen radial inneren Teil (62) aufweisen, der festsitzend in einer entsprechenden Öffnung (66, 68) angebracht ist, und einen radial äußeren Teil (64) aufweisen, der von der radial äußeren Oberfläche (44) des Außenrings aus hervorsteht, so dass er sich dem radial inneren Teil (74) des Sperrrings (72) gegenüber axial erstreckt.

6. Vorrichtung nach Anspruch 5, bei der der radial äußere Teil (64) jedes der Sperrstifte (60) zwischen zwei entsprechenden Nasen (84), die fest mit der Lagerstütze (20) verbunden sind, angeordnet ist, so dass die Nasen (84) die Drehbewegung des Außenrings (18) im Falle eines Bruchs der elastisch verformbaren Mittel (32) begrenzen.

7. Vorrichtung nach einem der Ansprüche 2 bis 4, bei der die ersten Mittel (52) in Form eines ringförmigen Elements (108) ausgeführt sind, das einen radial inneren Teil (110) aufweist, der sich in einer ringförmigen Auskehlung (112) des Außenrings (18) in Eingriff befindet, und einen radial äußeren Teil (114) aufweist, der von der radial äußeren Oberfläche (44) des Außenrings (18) aus hervorsteht, so dass er sich dem radial inneren Teil (74) des Sperrrings (72) gegenüber axial erstreckt.

8. Vorrichtung nach Anspruch 1, bei der das Sperrelement der genannte Befestigungsflansch (30) ist und die ersten Mittel (52) in Form eines Rings (120) ausgeführt sind, der von wenigstens zwei Ringsektoren (122a, 122b) gebildet wird, die am Außenumfang aneinander gefügt werden, und einen radial inneren Teil (124) aufweist, der sich in einer ringförmigen Auskehlung (112) des Außenrings (18) in Eingriff befindet, und einen radial äußeren Teil (126) aufweist, der mit Öffnungen (128) versehen ist, durch die hindurch Befestigungsorgane (31) zur Befestigung des Befestigungsflanschs (30) an der Lagerstütze (24) verlaufen.

9. Turbotriebwerk,
**dadurch gekennzeichnet,**
**dass** es wenigstens eine Vorrichtung nach einem der vorherigen Ansprüche aufweist.

10. Verfahren zum Zusammenbau einer Vorrichtung (10) nach einem der Ansprüche 1 bis 8,
**dadurch gekennzeichnet,**
**dass** es wenigstens die Verfahrensschritte umfasst, die darin bestehen:
- eine erste feste Gesamtanordnung (98) vorzugeben, die von der Lagerstütze (20, 24, 26) und von dem zuvor in dieser eingebauten Bund (28) gebildet wird,
- den Außenring (18) und die Verbindungsmittel (29), die fest mit dem Außenring verbunden sind, sowie das Sperrelement (72, 30) vorzugeben,
- die genannten ersten Mittel (52) in radialer Richtung von außen nach innen, bezogen auf eine Drehachse (13) des Außenrings, zu verschieben, so dass der genannte radial innere Teil (54, 62, 74, 102, 110, 124) der ersten Mittel in die bzw. jede entsprechende, in dem Außenring gebildete Aussparung (56) eingesetzt wird, und so eine zweite feste Gesamtanordnung (100) zu erhalten, die den Außenring (18), die Verbindungsmittel (29), das Sperrelement (72, 30) und die ersten Mittel (52) umfasst, sodann
- die zweite feste Gesamtanordnung (100) gegenüber der ersten festen Gesamtanordnung (98) zu verschieben, bis der Außenring (18) von der Lagerstütze (26) umgeben ist, sodann
- den genannten Befestigungsflansch (30) an der Lagerstütze (24) zu befestigen.

11. Verfahren nach Anspruch 10 zum Zusammenbau einer Vorrichtung nach Anspruch 2, welches zudem den Verfahrensschritt umfasst, der darin besteht, vor dem Verfahrensschritt des Verschiebens und des Einsetzens der ersten Mittel (52) in den Außenring den Sperrring (72) um den Außenring (18) herum dergestalt zu platzieren, dass der genannte radial innere Teil (74) des Sperrrings axial zwischen zumindest einem Teil (82) des Befestigungsflanschs (30) und der bzw. jeder Aussparung (56), die dazu vorgesehen ist, den radial inneren Teil (54) der ersten Mittel aufzunehmen, angeordnet wird.

## Claims

1. Device (10) for centring and guiding the rotation of a turbine engine shaft (12), including:
- a rolling bearing including an outer race (18);
- a bearing bracket (20, 24, 26) surrounding the outer race;
- a protecting ring (28) interposed between the outer race and the bearing bracket;
- means for coupling the outer race to the bearing bracket, the coupling means including an fastening flange (30) of annular shape mounted on the bearing bracket (20) and elastically deformable means (32) connecting the outer race (18) to the fastening flange (30); and
- retaining means for axially retaining the outer race (18) in the event of breakage of said elastically deformable means (32);
**characterised in that** the retaining means include:
- first means (52,108,120) separate from the protecting ring (28) and having a radially inner part (54, 62, 74, 102, 110, 124) engaged in at least one recess (56, 88) formed in a radially outer surface (44) of the outer race, and a radially outer part (58, 64, 114, 126) that extends projecting radially outwards with respect to the radially outer surface (44) of the outer race such that in the event of breakage of the elastically deformable means (32), the fastening flange (30) opposes an axial movement of said radially outer part (58) of the first means in a first direction (D1) oriented towards the elastically deformable means (32), and the bearing bracket (24) opposes an axial movement of said radially outer part (58, 64, 114, 126) of the first means in a second direction (D2) opposite to the first direction, and
- a retaining element (72, 30) separate from the protecting ring (28) and configured axially opposite the radially outer part (58, 64, 114, 126) of the first means (52) so as to form an abutment opposing the axial movement of the first means (52) in said first direction (D1).

2. Device according to claim 1, in which the retaining element is a retaining ring (72) separate from the protecting ring (28) and having a radially inner part (74) extending at a distance from the outer race (18) and forming an abutment opposing the axial movement of said radially outer part (58) of the first means in said first direction (D1) in the event of breakage of the elastically deformable means (32), and a radially outer part (76) interposed axially between the bearing bracket (24) and the fastening flange (30).

3. Device according to claim 2, in which the retaining ring (72) has a radially outer end (78) tightly mounted in an annular surface (80) of the fastening flange (30) delimited axially by an annular shoulder (82) of the fastening flange opposing an axial movement of the retaining ring in said first direction (D1).

4. Device according to claim 2, in which the radially outer part (76) of the retaining ring (72) is provided with orifices (118) traversed by components (31) for fastening the fastening flange (30) to the bearing bracket (24).

5. Device according to any one of claims 2 to 4, in which the first means (52) take the form of a plurality of retaining pins (60) each having a radially inner part (62) tightly mounted in a corresponding orifice (66, 68) of the outer race (18), and a radially outer part (64) protruding from the radially outer surface (44) of the outer race so as to extend axially opposite the radially inner part (74) of the retaining ring (72).

6. Device according to claim 5, in which the radially outer part (64) of each of the retaining pins (60) is positioned between two corresponding lugs (84) integral with the bearing bracket (20), such that the lugs (84) limit the rotation of the outer race (18) in the event of breakage of the elastically deformable means (32).

7. Device according to any of claims 2 to 4, in which the first means (52) take the form of an annular element (108) having a radially inner part (110) engaged in an annular groove (112) of the outer race (18), and a radially outer part (114) protruding from the radially outer surface (44) of the outer race (18) so as to extend axially opposite the radially inner part (74) of the retaining ring (72).

8. Device according to claim 1, in which the retaining element is said fastening flange (30), and the first means (52) take the form of a ring (120) formed of at least two ring segments (122a, 122b) mounted end-to-end circumferentially and having a radially inner part (124) engaged in an annular groove (112) of the outer race (18), and a radially outer part (126) provided with orifices (128) traversed by components (31) for fastening the fastening flange (30) to the bearing bracket (24).

9. Turbine engine, **characterised in that** it includes at least one device according to any of the preceding claims.

10. Method of assembling a device (10) according to any of claims 1 to 8, **characterised in that** it includes at least the steps consisting in:
- providing a first solid assembly (98) formed by the bearing bracket (20, 24, 26) and the protecting ring (28) mounted beforehand in the latter,
- providing the outer race (18) and the coupling means (29) integral with the outer race as well as the retaining element (72, 30);
- moving said first means (52) radially from the outside inwards with respect to an axis of revolution (13) of the outer race, so as to insert said radially inner part (54, 62, 74, 102, 110, 124) of the first means in the or each corresponding recess (56) formed in the outer race, and thereby obtain a second solid assembly (100) including the outer race (18), the coupling means (29), the retaining element (72, 30) and the first means (52), then
- moving the second solid assembly (100) with respect to said first solid assembly (98) until the outer race (18) is surrounded by the bearing bracket (26), then
- fastening said fastening flange (30) on the bearing bracket (24).

11. Method according to claim 10 of assembling a device according to claim 2, further including the step consisting in putting in place the retaining ring (72) around the outer race (18) prior to the step of movement and insertion of the first means (52) in the outer race, such that said radially inner part (74) of the retaining ring is configured axially between at least one part (82) of the fastening flange (30) and the or each recess (56) intended to receive the radially inner part (54) of the first means.
